# EUROPEAN PATENT APPLICATION

(11) **EP 1 985 336 A1**
(43) Date of publication of application: **29.10.2008**
(21) Application number: 08154995.8
(22) Date of filing: 23.04.2008
(51) Int. Cl.: A63B 41/12, A63H 3/06, F16K 15/20

(54) **Toy ball**

(30) Priority: 25.04.2007 JP 2007116166
(71) Applicant: Agatsuma Co., Ltd., Sumida-ku Tokyo (JP); Harasawa Kazumasa, Tokyo (JP)
(72) Inventor: Todokoro, Shinji, Sumida-ku Tokyo (JP)
(74) Representative: Skone James, Robert Edmund

(57) **Abstract**

To provide a toy ball which includes an air plug which facilitates the injection and discharge of air and which does not have to be plugged immediately after the completion of air injection, a toy ball is made up of a ball main body which has an air hole in a predetermined position and which is formed into a spherical body by injecting air into an interior thereof and a hollow rod-like air plug which is freely detachably mounted in the air hole in the ball main body and which allows air to be injected therethrough while kept mounted in the air hole, and the air plug is made up of a pipe-like air injecting pipe having an enlarged portion at an outer end portion thereof, an air flow-in member which is mounted at an inner end portion of the air injecting pipe and which has a space in an interior thereof, and a valve which is inserted in the space in the air flow-in member in such a manner as to be movable to a distal end of the air injecting pipe so as to be secured thereto.

## Description

This application is based upon and claims the benefit of priority from the prior Japanese Patent Application No. 2007-116166, filed on April 25, 2007, the entire contents of which are incorporated herein by reference.

The present invention relates to a toy ball which is used after it has been inflated by feeding air thereinto.

Conventionally, there have been sold many toy balls of air injection type like a beach ball which is inflated by injecting air into an interior thereof for use, and there have been made many technical proposals with respect to these air injection type toy balls. As a common air injecting portion of the air injection type toy balls, a configuration is used widely in which a valve is formed at an inner end portion of a cylindrical air injecting port made of rubber or the like which is situated inside the ball for closing an opening in the cylindrical air injecting port. In this configuration, when air is injected from the air injecting port, the valve is opened towards the inside of the ball by the air so injected, while when no air is injected, the valve closes the air injecting port to prevent the leakage of air from the inside of the ball by virtue of the internal pressure inside the ball, and furthermore, a plug is fitted in the air injecting port from the outside so as to ensure that there is no air leakage from the toy ball.

For example, Japanese Unexamined Patent Publication No. 2000-42142 proposes a configuration in which tooth-shaped projections are provided along a circumferential edge of an external lid as a plug, while tooth-shaped projections are also formed along an inner edge of an air inlet port in such a manner as to be locked with the projections on the external lid, whereby by tightly fitting the plug into the air inlet port, the outer lid which is the plug is strongly fixed in place in the air inlet port.

In general, with the conventional air injecting portion, the air injecting portion also needs to be formed on a ball main body at the same time as the ball main body is formed, and this has made difficult the formation of the ball. In addition, since the valve needs to be opened using the pressure of air injected when air is injected into the ball, a large air pressure becomes necessary when air is injected, and this has made difficult the injection of air. Additionally, when air is discharged from the ball, the valve needs to be removed or displaced, and this has made difficult the discharge of air.

In addition, while there exists a method in which a small hole is formed in a ball, a straw is passed through the hole for injecting air into the inside of the ball and when the injection of air is completed, the straw is removed and a plug is placed in the small hole, in this case, there has been caused a problem that air leaks out from the removal of the straw until the placement of the plug.

The present invention has beenmade in view of the problems inherent in the related art, and an object thereof is to provided a toy ball which includes an air plug which is easy to shape and manufacture of the toy ball, as well as easy injection and discharge of air and which is easy to plug after air injection is completed.

According to an aspect of the invention, there is provided a toy ball (1) which is made up of a ball main body (2) having an air hole (21) in a predetermined position and adapted to be formed into a spherical body by injecting air into an interior thereof and a hollow rod-like air plug (3) which is freely detachably mounted in the air hole (21) and which allows air to be injected therethrough while kept mounted (retained) in the air hole (21).

Preferably, the air plug (3) includes a pipe-like air injecting pipe (32) having an enlarged portion at an outer end portion thereof, an air flow-in member (31) which is mounted at an inner end portion of the air injecting pipe (32) and which has a space in an interior thereof, and a valve (33) which is inserted into the space in the air flow-in member (31) in such a manner as to be sorbable movable state to a distal end of the air injecting pipe (32) by virtue of pressure of air inside the ball main body (2) so as to be secured thereto. In other words, the valve is movable between a first position in which the valve abuts and seals the air injecting pipe, and a second position in which it does not obstruct the air injecting pipe. In both positions, the valve is retained by the air flow-in member (cap). When air is not being injected, the air pressure inside the main body of the ball urges the valve into the first (sealed) position.

Preferably, the valve is spherical.

In certain preferred embodiments, the air flow-in member (31) has a connecting portion (41) and a cross-shaped wall portion (45). The connecting portion (41) has an injecting pipe fixing portion (42) which is formed into a substantially circular cylindrical shape and into which the end portion of the air injecting pipe (32) is inserted to be fixed in place and a space defining portion (44) which defines a moving space (48) which is a space in which the spherical valve (33) is disposed, and the cross-shaped wall portion (45) is positioned at an inner end portion of the connecting portion (41) and has a wall which is formed into the shape of a cross, so that air flow paths (46) are formed between connecting portions where the connecting portion (41) and the cross-shaped wall portion (45) connect to each other.

Preferably, the air injecting pipe (32) is formed into a pipe-like shape, has a semi-spherically shaped cut-out portion (54) at the inner end portion thereof and an air injecting port (51) in the enlarged portion at the outer end portion thereof, and furthermore, includes a lid portion (52) for closing the air injecting port (51).

Preferably, the air injecting port (51) of the air injecting pipe (32) is formed into the shape of a multi-staged frustum and includes on an outer circumferential edge thereof a projecting line (53) which is to be locked on the inner edge of the air hole (21).

According to the aspect of the invention, the toy ball can be provided which includes the air plug which is easy to shape and manufacture the toy ball, as well as easy injection and discharge of air and which is easy to plug after air injection is completed.

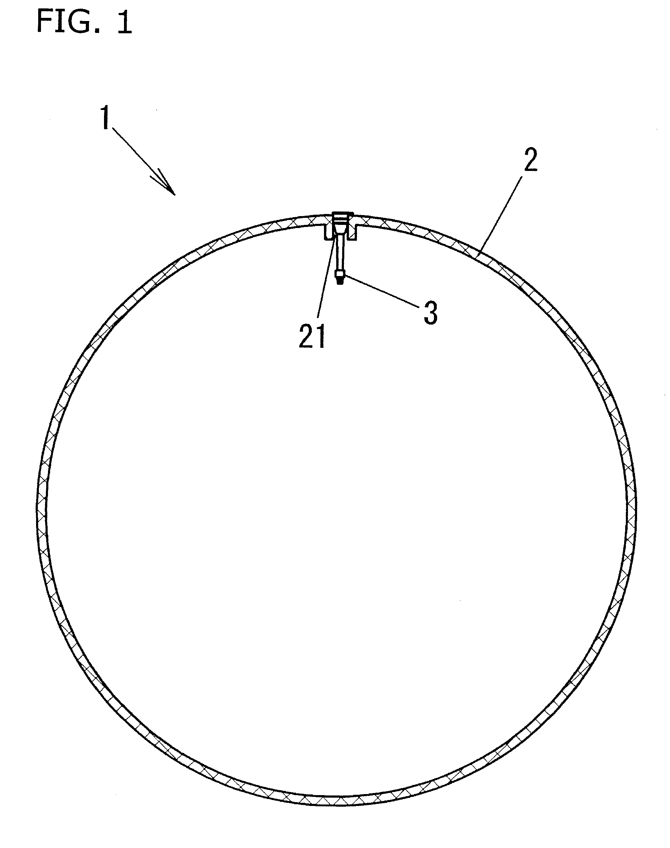

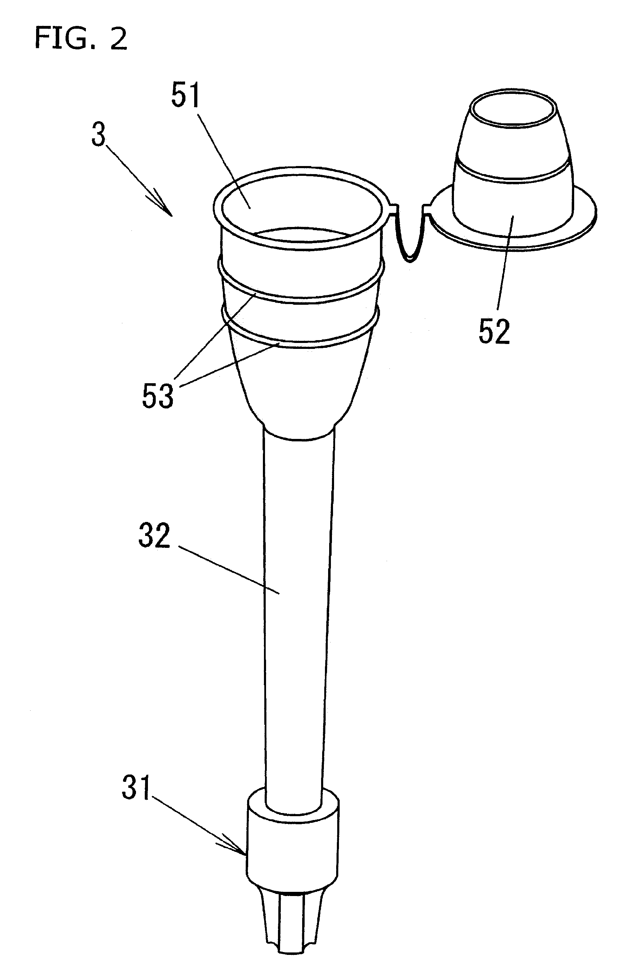

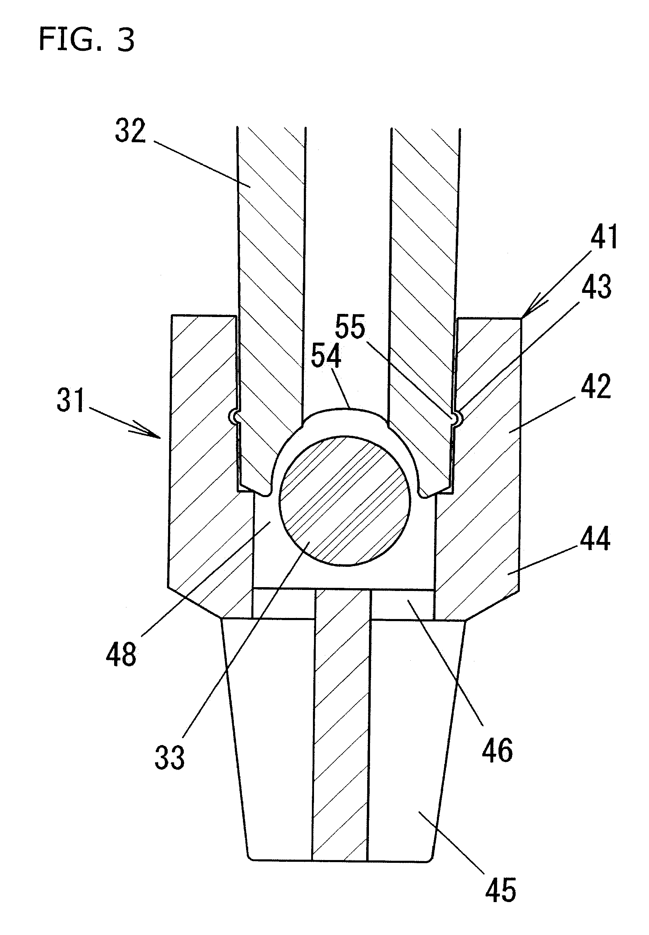

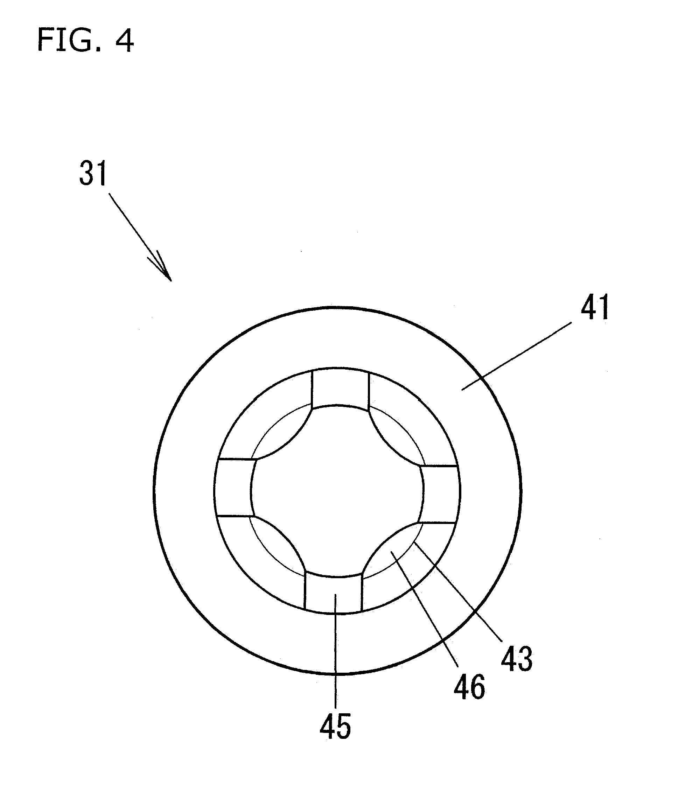

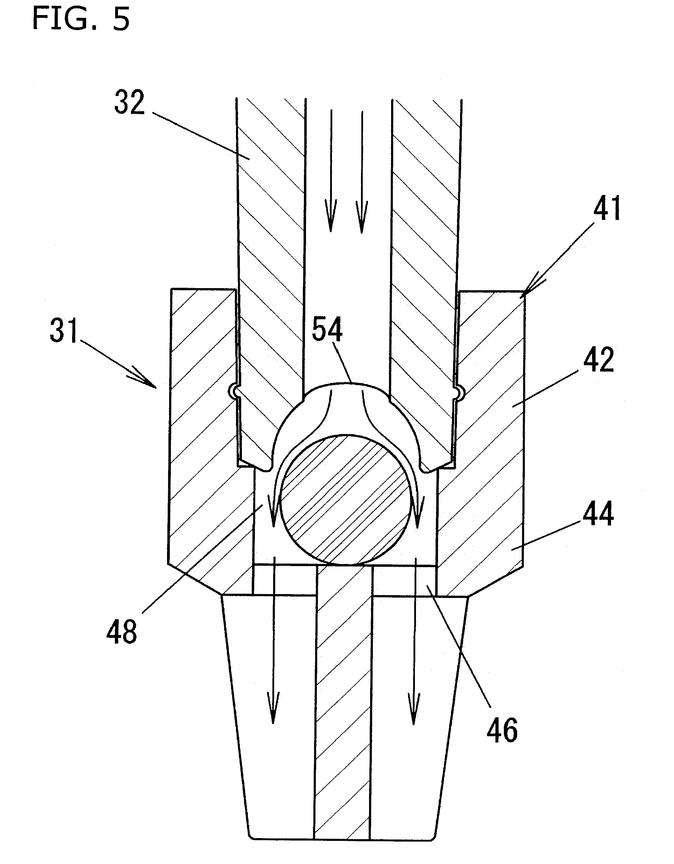

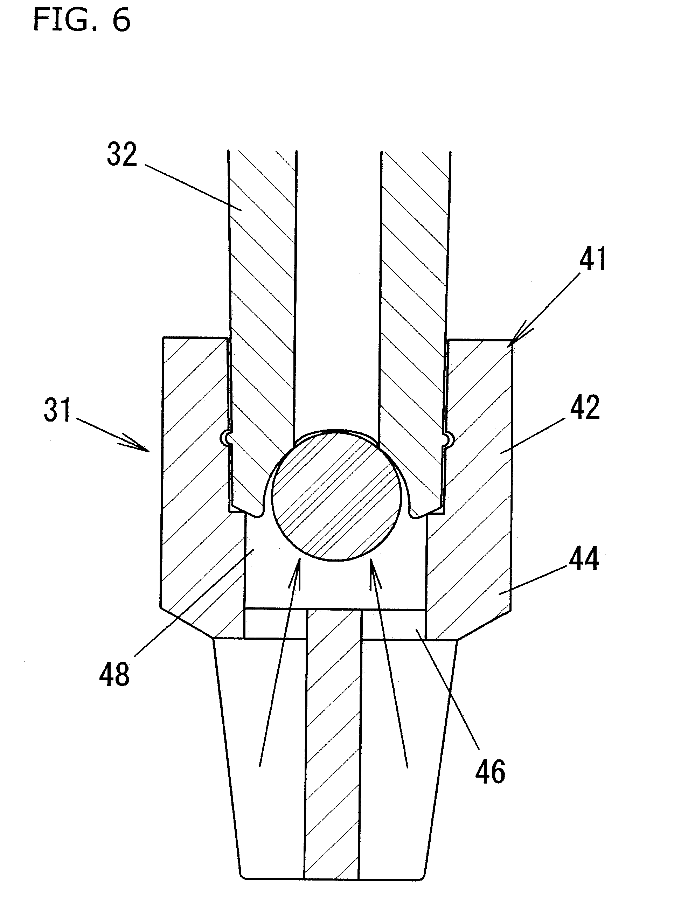

An example of a toy ball according to the invention will now be described with reference to the accompanying drawings, in which:-
Fig. 1 is a sectional view showing an embodiment of a toy ball according to the invention, and Fig. 2 is a perspective view showing an example of an air plug for use on the toy ball according to the invention. In addition, Fig. 3 is a partially enlarged view of the air plug for use on the toy ball according to the invention, Fig. 4 is a bottom view of the air plug for use on the toy ball according to the invention, Fig. 5 is a diagram showing a state in which air is injected through the air plug for use on the toy ball according to the invention, and Fig. 6 is a diagram showing a state in which the passage of air is interrupted in the air plug for use on the toy ball according to the invention.

A toy ball 1 which constitutes an embodiment of the invention is such as to be made up of a ball main body 2 having an air hole 21 in a predetermined position and adapted to be formed into a spherical body by injecting air into an interior thereof and a hollow rod-like air plug 3 which is freely detachably mounted in the air hole 21 and which allows air to be injected while kept mounted in the air hole 21.

This air plug 3 includes a pipe-like air injecting pipe 32 which has an enlarged portion at an outer end portion thereof, an air flow-in member 31 which is mounted at an inner end portion of the air injecting pipe 32 which is positioned inside the toy ball 1 and which has a space in an interior thereof, and a spherical valve 33 which is inserted into the space in the air flow-in member 31 in such a manner as to be sorbable movable state to a distal end of the air injecting pipe 32 by virtue of pressure of air inside the ball main body 2 so as to be secured thereto.

In addition, the air flow-in member 31 has a connecting portion 41 and a cross-shaped wall portion 45. The connecting portion 41 has an injecting pipe fixing portion 42 which is formed into a substantially circular cylindrical shape and into which the end portion of the air injecting pipe 32 is inserted to be fixed in place and a space defining portion 44 which defines a moving space 48 which is a space in which the spherical valve 33 is disposed, and the cross-shaped wall portion 45 is positioned at an inner end portion of the connecting portion 41 and has a wall which is formed into the shape of a cross, so that air flow paths 46 are formed between connecting portions where the connecting portion 41 and the cross-shaped wall portion 45 connect to each other.

Additionally, the air injecting pipe 32 is formed into a pipe-like shape, has a semi-spherically shaped cut-out portion 54 at the inner end portion thereof and an air injecting port 51 in the enlarged portion at the outer end portion thereof, and furthermore, includes a lid portion 52 for closing the air injecting port 51. In addition, the air injecting port 51 of the air injecting pipe 32 is formed into the shape of a multi-staged frustum and includes on an outer circumferential edge thereof projecting lines 53 which are to be locked on an inner edge of the air hole 21.

Hereinafter, an embodiment of the invention will be described based on the drawings. As is shown in Fig. 1, a toy ball 1 of the invention is made up of a ball main body 2 which is formed of a stretchable member such as a vinyl chloride resin and which has an air hole 21 in a predetermined position and an air plug 3 which is freely detachably mounted in this air hole 21.

This air plug 3 is made not only to prevent the leakage of air from the air hole 21 but also to allow air to be injected into the inside of the ball main body 2 therethrough, and as is shown in Fig. 2, the air plug 3 includes a pipe-like air injecting pipe 32 which has an enlarged portion at an outer end portion thereof which lies to face outwards of the toy ball 1, an air flow-in member 31 which is mounted at an inner end portion of the air injecting pipe 32 and which has a space in an interior thereof, and a spherical valve 33 as shown in Fig.3 which is inserted into the space in the air flow-in member 31 in such a manner as to be sorbable movable state to a distal end of the air injecting pipe 32 by virtue of pressure of air within the ball main body 2 so as to be fixed thereto.

As is shown in Figs. 2 and 3, the air injecting pipe 32 is formed into a pipe-like shape and has a semi-spherically shaped cut-out portion 54 at the inner end portion thereof and an air injecting port 51 in the enlarged portion at the outer end portion thereof, and furthermore, includes a lid portion 52 adapted to close the air injecting port 51. The air injecting pipe 32 also has in a predetermined position on an outer circumferential edge thereof a fixing projection 55 which is made to be locked in a fixing recess 43 on an air flow-in portion 31, which will be described later. In addition, the air injecting port 51 of the air injecting pipe 32 is formed into the shape of a multi-staged frustum and includes projecting lines 53 adapted to be locked on an inner edge of the air hole 21.

In addition, the air flow-in member 31 has a connecting portion 41 and a cross-shaped wall portion 45, and this connecting portion 41 is formed into a substantially circular cylindrical shape and has an injecting pipe fixing portion 42 into which the end portion of the air injecting pipe 32 is inserted to be fixed in place and a space defining portion 44 which defines a moving space 48 in an interior of which the spherical valve 33 is disposed.

This injecting pipe fixing portion 42 is formed into a circular cylindrical shape and whose inside diameter size is substantially the same as an outside diameter of the air injecting pipe 32. The air injecting pipe fixing portion 42 includes in a predetermined position on an inner surface thereof a fixing recess 43 adapted to be locked on a fixing projection provided 55 on the air injecting pipe 32 and is molded integrally with the space defining portion 44. In addition, the space defining portion 44 is formed into a circular cylindrical shape whose inside diameter is made smaller than that of the injecting pipe fixing portion 42 and is opened at an inner end portion, so that a stepped portion is formed between the inner surface of the injecting pipe fixing portion 42 and an inner surface thereof.

In addition, the cross-shaped wall portion 45 of the air flow-in member 31 is positioned at an inner end portion of the connecting portion 41 and is molded integrally with the space defining portion 44 with a wall thereof formed into the shape of a cross, so that air flow paths 46 are defined between connecting portions where the connecting portion 41 and the cross-shaped wall portion 45 connect to each other. These air flow paths 46 are defined by spaces which are formed outwardly of an intersecting portion where respective wall components of the cross-shaped wall portion 45 intersect each other and inside the opening at the inner end portion of the space defining portion 44.

In the toy ball configured as has been described heretofore, when the inner end portion of the air injecting pipe 32 is tightly fitted in the injecting pipe fixing portion 42 of the air flow-in portion 31, the inner end portion of the air injecting pipe 32 is locked at the stepped portion between the injecting pipe fixing portion 42 and the space defining portion 44, and the fixing recess 43 and the fixing projection 55 are allowed to mesh with each other. Because of this, the air flow-in member 31 and the injecting pipe fixing portion 42 can be fixed together airtightly and strongly. In addition, since an outer circumferential edge of the air flow-in portion 31 is formed larger in diameter than the outer circumferential edge of the air injecting pipe 32, a stepped portion is formed in the vicinity of a connecting portion between the outer circumferential edge of the air flow-in member 31 and the outer circumferential edge of the air injecting pipe 32, whereby the outside diameter of the air injecting pipe 32 can be increased in the position of the inner end portion thereof.

The spherical valve 33 is formed from a resin which is light enough to be moved by air and is positioned in the moving space 48 which is defined by the space defining portion 44 and the cut-out portion 54 formed at the inner end portion of the air injecting pipe 32, so that the spherical valve 33 is operated by virtue of pressure of air to move towards the air injecting pipe 32 side or the cross-shaped wall portion 45 side.

Then, in the air plug 3, when air is injected into the ball main body 2, as is shown in Fig. 5, the spherical valve 33 moves towards an inner end portion of the moving space 48 by virtue of pressure of air injected from the air injecting pipe 32 and its own weight, whereby the air injected from the air injecting pipe 32 flows along a circumferential edge of the spherical valve 33 and enters an interior of the ball main body 2 from the air paths 46 defined between the opening in the inner portion of the air defining portion 44 and the cross-shaped wall portion 45.

In addition, when the injection of air is stopped, as is shown in Fig. 6, the spherical valve 33 is moved to an outer end portion of the moving space 48 by virtue of internal pressure inside the ball main body 2 so as to close the opening in the inner end portion of the air injecting pipe 32, whereby the spherical valve 33 constitutes a plug which prevents the leakage of air from the interior of the ball main body 2 to the exterior thereof, thus the leakage of air from the ball 1 being able to be prevented.

Furthermore, air can be prevented from escaping from an outer end portion of the air injecting port 51 by fitting the lid portion 52 in the outer end portion of the air injecting port 51, whereby the leakage of air from the toy ball 1 can be prevented both by the spherical valve 33 and the lid portion 52.

Next, a method of using the toy ball 1 of the embodiment will be described. Since the toy ball 1 is such as to be inflated to be played with, air needs to be injected into the interior thereof. When air is so injected, firstly, the air flow-in portion 31, which constitutes a distal end portion of the air plug 3, is inserted into the air hole 21, and air is blown into the ball main body 2 from the air injecting port 51 of the air plug 3 which is held between the lips. As this occurs, although air can be blown into the ball main body 2 with the air plug 3 inserted deeply into the ball main body 2, since it is easy to hold the air injecting port 51 between the lips where only the distal end of the air plug 3 is inserted into the ball main body 2 so as to inject air as using a straw, the injection of air is facilitated.

When the injection of air is completed, the air injecting port 51 is released from the lips and the air plug 3 is pushed into the ball main body 2 to a root portion thereof, so that an outer circumferential edge of the air injecting port 51 of the air plug 3 is locked with the inner edge of the air hole 21 and the lid portion 52 is tightly fitted in the air injecting port 51. The leakage of air from the air hole 21 can be prevented by bringing the outer circumferential edge of the air injecting port 51 into locking engagement with the inner edge of the air hole 21, and furthermore, the leakage of air can be prevented further tightly by covering the air injecting port 51 with the lid portion 52.

On the other hand, when the air so injected is discharged from the ball main body 2, since, by removing the air plug 3 from the air hole 21, there exists nothing covering the air hole 21, air can easily be discharged. In addition, when air is discharged, since the air injecting port 51 constitutes the enlarged portion of the air injecting pipe 32, air can be discharged by removing only the air injecting port 51 which is locked in the air hole 21 in the ball main body 2.

According to the toy ball 1 of the embodiment, by tightly fitting the air plug 3 which allows for air injection in the air hole 21 in the ball main body 2, not only can the leakage of air be prevented but also the injection of air can be facilitated.

In addition, since the spherical valve 33 is disposed in the interior of the air plug 3, so that after the injection of air is completed, the spherical valve 33 so disposed closes the inner end portion of the air injecting pipe 32 by virtue of the internal pressure of the ball main body 2, the plug does not have to be place in such a manner as to tightly close the air hole 21 immediately after the completion of injection of air, and hence, the placement of the plug 3 in the air hole 21 can be facilitated.

Furthermore, since the air injecting port 51 of the air injecting pipe 32 can be covered by the lid 52, the air injecting port 51 can be so covered while the spherical valve 33 closes the air injecting pipe 32, the leakage of air can be prevented.

In addition, since the ball main body 2 of the toy ball 1 only has to include the air hole 21, the air plug does not have to be molded integrally therewith, this facilitating the manufacture of the toy ball 1.

## Claims

1. A toy ball comprising:
a ball main body having an air hole in a predetermined position and adapted to be formed into a spherical body by injecting air into an interior thereof; and
a hollow rod-like air plug which is freely detachably mounted in the air hole and which allows air to be injected therethrough while kept mounted in the air hole.

2. A toy ball as set forth in Claim 1, wherein
the hollow rod-like air plug comprises a pipe-like air injecting pipe having an enlarged portion at an outer end portion, an air flow-in member which is mounted at an inner end portion of the air injecting pipe and which has a space in an interior thereof, and a valve which is inserted into the space in the air flow-in member in such a manner as to be sorbable movable state to a distal end of the air injecting pipe by virtue of pressure of air inside the ball so as to be secured thereto.

3. A toy ball as set forth in Claim 2, wherein
the air injecting pipe comprises a projecting line provided on an outer circumferential edge of an enlarged portion which is formed into the shape of a multi-staged frustum in such a manner as to be locked on an inner edge of the air hole in the ball main body.

4. A toy ball as set forth in Claim 2 or 3, wherein
the air injecting pipe is formed into a pipe-like shape, has a semi-spherically shaped cut-out portion at the inner end portion and an air injecting port in the enlarged portion at the outer end portion and furthermore comprises a lid portion which closes the air injecting port.

5. A toy ball as set forth in any of Claims 2 to 4, wherein
the air flow-in member has a connecting portion and a cross-shaped wall portion,
the connecting portion having an injecting pipe fixing portion which is formed into a substantially circular cylindrical shape and into which the end portion of the air injecting pipe is inserted to be fixed in place and a space defining portion which defines a moving space which is a space in which the valve is disposed, the cross-shaped wall portion being positioned at an inner end portion of the connecting portion and having a wall which is formed into the shape of a cross, so that air flow paths are formed between connecting portions where the connecting portion and the cross-shaped wall portion connect to each other.

6. A toy ball as set forth in any of claims 2 to 5 wherein the valve is spherical.
